# EUROPÄISCHE PATENTSCHRIFT

(11) **EP 0 619 132 B1**
(45) Veröffentlichungstag und Bekanntmachung des Hinweises auf die Patenterteilung: **24.09.1997**
(21) Anmeldenummer: 94102356.6
(22) Anmeldetag: 17.02.1994
(51) Int. Cl.: B01F 3/04

(54) **Vorrichtung zum Begasen von Flüssigkeiten**
Device for introducing gas in liquids
Dispositif pour gazifier des liquides

(30) Priorität: 20.02.1993 DE 9302498 U
(43) Veröffentlichungstag der Anmeldung: 12.10.1994
(73) Patentinhaber: SCHÜSSLER, Karl-Heinz, D-61348 Bad Homburg v. d. Höhe (DE)
(72) Erfinder: SCHÜSSLER, Karl-Heinz, D-61348 Bad Homburg v. d. Höhe (DE)
(74) Vertreter: Keil, Rainer A., Dipl.-Phys. Dr.

(56) Entgegenhaltungen:
- EP-A- 0 482 332
- DE-U- 9 207 094
- US-A- 4 489 016
- US-A- 5 059 358

## Beschreibung

Die Erfindung bezieht sich auf eine Vorrichtung zum Begasen von Flüssigkeiten, insbesondere zum Belüften von Abwasser, mit einem an eine Gaszufuhreinrichtung anschließbaren Gasverteiler, welcher einen vorzugsweise im wesentlichen zylindrischen und vorzugsweise mit vertikaler Längsachse anordenbaren und vorzusweise in seinem Boden mit ein oder mehreren mit seinem Innenraum in Strömungsverbindung stehenden Flüssigkeitskanälen ausgestatteten Grundkörper und eine diesen membranartig umspannende, vorzugsweise schlauchförmige Wandung aus elasti-schem Material mit Perforationen aufweist, wobei die Wandung über einen Gaseinlaß des Grundkörpers von innen mit Gas beaufschlagbar ist.

Eine derartige Vorrichtung ist aus der DE-U-9 207 094 bekannt. Sie weist einen Gasverteiler mit einem Grundkörper auf, um welche die Wandung im wesentlichen zylindrisch mit im wesentlichen vertikal verlaufender Mittelachse angeordnet ist. Die Wandung begrenzt eine Kammer des Grundkörpers, welche mit wenigstens einem Gaszufuhrkanal verbunden ist und wenigstens einen durch den Grundkörper im wesentlich vertikal hindurchführenden Flüssigkeitskanal umschließt. Hierbei tritt das Gas über die gesamte zylindrische Außenfläche der membranartigen Wandung in horizontaler Richtung aus, so daß die Verweildauer der Gasbläschen in der Flüssigkeit erhöht und dadurch der Belüftungseffekt gegenüber bis dahin bekannten Begasungsvorrichtungen verbessert ist. Durch den wenigstens einen den Grundkörper vertikal durchsetzenden Flüssigkeitskanal wird darüber hinaus ein nach unten gerichteter Flüssigkeitsstrom hervorgerufen, durch welchen die Flüssigkeitsbegasung noch weiter verbessert wird.

Aufgabe der Erfindung ist es, eine Begasungsvorrichtung der eingangs genannten Art unter Beibehaltung deren Vorteile dahingehend weiterzubilden, daß eine möglichst gleichmäßige Begasung der Flüssigkeit ermöglicht ist.

Diese Aufgabe wird erfindungsgemäß im wesentlichen dadurch gelöst, daß die Wandung zwischen ihren axialen Endbereichen, an welchen sie an dem Grundkörper gehalten ist, so von einem Verstellmittel ringartig umfaßt ist, daß die Wandung im Bereich des Verstellmittels jedenfalls ohne Gasbeaufschlagung an dem Grundkörper anliegt, und daß das Verstellmittel in Richtung der Längsachse des Grundkörpers verstellbar ist.

Da das Verstellmittel der gasdruckbedingten Auswölbung der Wandung entgegenwirkt, kann durch die Axialverschiebung des Verstellmitetls - über die axiale Länge des Grundkörpers gesehen - das Begasungsbild der aus der Wandung austretenden Gasblasen beeinflußt werden. Denn unter dem Einfluß des die Wandung beaufschlagenden Gases wölbt sich diese außerhalb des Verstellmittels stärker nach außen auf als im Bereich des Verstellmittels, so daß sich zwischen dem Grundkörper und der Wandung zwei im Bereich des Verstellmittels miteinander in Verbindung stehende, je nach axialer Lage des Verstellmittels unterschiedlich gestaltete Kammern bilden. Aufgrund des Verstellmittels, welches die Wandung zunächst eng umfaßt, wird also die herkömmliche Kammer in zwei Teilkammern unterteilt, wobei ein Gasübertritt von der ersten, dem Gaseinlaß näher liegenden Kammer zu der zweiten grundkörperendseitigen Kammer, im wesentlichen durch den Querschnitt des die beiden Teilkammern verbindenden Ringkanals bestimmt ist. Dabei hängt der Querschnitt dieses Ringkanals davon ab, in welchem Maße sich das Verstellmittel unter der Beaufschlagung des Gasdruckes in gleicher Richtung wie die membranartige Wandung elastisch aufweiten kann. Je weiter das Verstellmittel von dem Gaseinlaß weg verschoben wird, umso mehr Gasblasen können aus der ersten Kammer austreten. Auf diese Weise ist es möglich, auch noch nachträglich in einem Begasungsbecken die große Anzahl von Gasverteilern unter Berücksichtigung der unterschiedlichen Druckverhältnisse so aufeinander abzustimmen, daß durch jeden Gasverteiler etwa der gleiche Gasvolumenstrom austritt und dadurch eine über das gesamte Becken im wesentlichen gleichmäßige Begasung erfolgt.

Vorteilhafterweise ist das Verstellmittel als wenigstens eine Manschette aus elastischem Material ausgebildet, welche die Wandung umschließt. Hierbei ist eine einfache Einstellung des Begasungsbildes durch Verschieben der flexiblen Manschette in Richtung der Längsachse des Gasverteilers längs der Wandung möglich. Statt einer elastischen Manschette können auch zwei oder mehrere solcher Manschetten eingesetzt werden, wodurch die Möglichkeiten der Veränderung des Begasungsbildes noch erhöht werden. Als elastisch dehnbares Material für die Manschette bzw. Manschetten kommt z.B. das gleiche Material in Betracht, aus welchem auch die Wandung selbst bestehen kann, insbesondere Gummi oder Kunststoff.

Nach einer weiteren Ausgestaltung der Erfindung nimmt die Anzahl der Perforationen der Wandung pro Flächeneinheit und/oder die Größe der Perforationen in Gasströmungsrichtung, vorzugsweise also in vertikaler Richtung, d.h. nach oben hin, ab. Durch diese Maßnahme wird den Druckverhältnissen in der zu begasenden Flüssigkeit Rechnung getragen, so daß eine Vergleichmäßigung des Gasblasenaustrittes über die Oberfläche der Wandung trotz des in der zu begasenden Flüssigkeit nach oben abfallenden Druckes erzielt wird.

Gemäß einem weiteren Erfindungsmerkmal ist der der Wandung über den Gaseinlaß insgesamt zuführbare Gasvolumenstrom mittels eines an dem Grundkörper von außen verstellbaren, d.h. z.B. verdreh- oder verschiebbaren Justierelements einstellbar. Während durch die zunächst genannten Erfindungsmaßnahmen das aus den Perforationen der Wandung austretende Begasungsbild - über die Längserstreckung der Wandung gesehen - gleichzeitig mit dem gesamten Gasvolumenstrom veränderbar ist, kann mit der jetzigen Erfindungsmaßnahme eine zusätzliche selbständige Regulierung oder Einstellung des insgesamt aus der Wandung austretenden Gasvolumenstromes erfolgen. Auch mittels des Justierelements, da von außen zugänglich, ist bei mehreren, an der Gaszufuhreinrichtung eines Begasungsbeckens angeschlossenen Gasverteilern großer Anzahl eine individuelle Einstellung des aus jedem Gasverteiler austretenden Gasvolumenstroms nachträglich auf einfache Weise so durchführbar, daß aus allen Gasverteilern trotz unterschiedlicher Druckverhältnisse etwa der gleiche Gasvolumenstrom austritt.

In besonderer Ausgestaltung der Erfindung ist in dem Boden des Grundkörpers eine axiale, vorzugsweise zentrische Bohrung als der Gaseinlaß vorgesehen, von welcher aus ein oder mehrere, vorzugsweise radiale Verbindungskanäle in Richtung der Wandung abzweigen, wobei das Justierelement - je nach Stellung - die Verbindungskanäle - mehr oder weniger - überlappend in der Bohrung aufgenommen ist. Auf diese Weise ist einerseits eine über den Umfang gleichmäßige Gaszufuhr zu der Wandung, andererseits eine einfache und zuverlässige Einstellbarkeit des Gasvolumenstroms gewährleistet.

Nach einer anderen Weiterbildung der Erfindung weist das Justierelement einen ersten Abschnitt, einen daran anschließenden zweiten Abschnitt mit größerem Außendurchmesser und zwischen den Abschnitten eine Ringschulter auf, mit welcher das Justierelement gegen eine Ringschulter der Bohrung anliegt. Das Justierelement kann durch diese konstruktive Ausgestaltung einfach montiert und sicher an dem Grundkörper festgelegt und geführt werden.

Vorteilhafterweise ist der zweite Abschnitt in der Bohrung des Gaseinlasses aufgenommen und der erste Abschnitt erstreckt sich in den stirnseitig offenen Innenraum des Grundkörpers. Auf diese Weise wirkt das Justierelement einerseits im Bereich der Gaszufuhr, andererseits ist es von der offenen Stirnseite des Grundkörpers aus betätigbar.

Der erste Abschnitt des Justierelements ist zweckmäßigerweise von einer die Ringschulter bildenden Stirnwand der Bohrung umfaßt. Die Stirnwand dient dadurch als Widerlage für die Ringschulter des Justierelements, so daß das vom Druck des zugeführten Gases beaufschlagte Justierelement sicher an der Stirnwand gehalten ist.

Um ein Eindringen von Flüssigkeit in den Gaseinlaß bzw. ein undefiniertes Austreten von Gas im Bereich der Lagerung des Justierelements zu vermeiden, ist vorteilhafterweise zwischen den Ringschultern von Justierelement und Stirnwand eine das Justierelement umfassende Ringdichtung angeordnet.

Die Dichtwirkung kann dadurch weiter erhöht werden, daß eine den ersten Abschnitt des Justierelements umfassende Ringdichtung auf der Außenseite der Stirnwand aufsitzt.

Gemäß einer noch weiteren Ausgestaltung der Erfindung weist das Justierelement im Bereich des zweiten Abschnitts eine Ringwand mit einer oder mehreren Aussparung(en) auf, welche mit dem Öffnungsquerschnitt von einem oder mehreren der Verbindungskanäle in Deckung bringbar ist (sind). Mit einer derartigen Ausbildung kann durch ein bloßes Verdrehen des Justierelements innerhalb der Stirnwand der Öffnungsquerschnitt der Verbindungskanäle mehr oder weniger verringert bzw. erweitert werden, so daß eine einfache Einstellung des zur Wandung gelangenden Gasvolumenstroms möglich ist.

Vorteilhafterweise hat das Justierelement einen sich an den ersten Abschnitt anschließender Kopfabschnitt, der mit Mitteln zum Verdrehen des Justierelements, insbesondere mittels eines entsprechenden Werkzeugs, ausgestattet ist; der Kopfabschnitt kann insbesondere einen Verdrehschlitz aufweisen. Durch diese Maßnahme kann ohne weiteres das Justierelement bspw. auch während des Betriebes der Vorrichtung, also bei geflutetem Begasungsbecken, und damit der aus dem Gasverteiler austretende Gasvolumenstrom, bspw. mittels eines Schraubendrehers, eingestellt werden.

Gemäß einem weiteren Erfindungsmerkmal weist das Justierelement wenigstens eine auf und zu steuerbare Entwässerungsöffnung auf. Mit Hilfe dieser kann in den Gaseinlaß eingedrungene Flüssigkeit nach Verstellen des Justierelements in Schließstellung mittels des Begasungsgases ausgeblasen werden.

In besonderer Ausgestaltung dieses Erfindungsgedankens weist dabei das Justierelement eine sich zum Gaseinlaß öffnende Bohrung auf und es sind die Entwässerungsöffnungen bildende Radialkanäle im Bereich des Kopfabschnitts in der Außenwand der Bohrung des Justierelements angeordnet.

Durch die Entwässerungsöffnungen kann ggf. während des Begasungsvorganges ebenfalls einne geringe Menge an Gas austreten. Es ist aber auch möglich, daß das Justierelement wenigstens im Bereich der Entwässerungsöffnungen von einem Mantel aus elastischem Material umfaßt ist. Dann fungiert das mit dem elastischen Mantel ausgestattete Justierelement quasi als Überdruckventil, welches z.B. dann öffnet, wenn bei in Öffnungsrichtung befindlichem Justierelement Überdruck an der perforierten Wandung entsteht oder wenn das Justierelement in Schließstellung gebracht ist, so daß der flexible Mantel aufgrund des Gasdruckes von den Entwässerungsöffnungen abgehoben wird und durch diese die in den Gaseinlaß eingetretene Flüssigkeit wieder ausgetrieben werden kann.

Die Löcher der Perforationen der Wandung und/oder des Mantels sind vorzugsweise mittels Vorspannung des diese bildenden elastischen Materials eingestanzt bzw. gestochen. So kann erreicht werden, daß die Löcher ohne Gasbeaufschlagung praktisch geschlossen sind und sich erst bei Überschreiten eines vorgegebenen Gasdrucks öffnen.

Die Löcher der Perforationen können in ihrem Querschnitt unterschiedliche Gestalt haben, z.B. kreis-, schlitz- oder sternförmig. In ihrer Tiefe können sie keil- oder kegelförmig sein mit von außen nach innen zunehmendem oder abnehmendem Querschnitt.

Weitere Ziele, Vorteile und Anwendungsmöglichkeiten der Erfindung ergeben sich aus der nachfolgenden Beschreibung von Ausführungsbeispielen anhand der Zeichnung.

Es zeigen:
- Fig. 1: eine Draufsicht auf ein Ausführungsbeispiel eines die Erfindung aufweisenden Gasverteilers, und
- Fig. 2: eine Schnittdarstellung des Gasverteilers nach Linie A-B von Fig. 1.

Die dargestellte Vorrichtung zum Begasen von Flüssigkeiten weist einen Gasverteiler 10 auf, welcher über einen z.B. mit Gewinde versehenen Verbindungsstutzen 14 an ein Verteilerrohr 12 einer z.B. in einem Begasungsbecken einer Kläranlage anzuordenden Gaszufuhreinrichtung angeschlossen ist. Der Gasverteiler 10 weist einen im wesentlichen zylindrischen Grundkörper 16 mit einem Innenraum 88 auf. In der dargestellten montierten Lage verläuft die Längsachse 75 des Grundkörpers 16 vertikal. Über die Außenwand des Grundkörpers 16 ist eine membranartige, schlauchförmige Wandung 18 aus elastischem Material, wie Gummi oder Kunststoff, gespannt. Die Wandung 18 ist am oberen und unteren Abschnitt 24, 26 des Grundkörpers 16 mittels schellenartiger Klammern 20, 22, z.B. aus Edelstahl, festgelegt. Die obere Stirnseite des Innenraums 88 ist offen, während im Bereich des unteren Abschnitts 26 des Grundkörpers 16 ein Boden 28 vorgesehen ist.

In dem Boden 28 ist zentrisch und koaxial zur Längsachse 75 eine einen Gaseinlaß 30 bildende Bohrung 51 mit einem Gewinde für den Anschluß an den Verbindungsstutzen 14 vorgesehen. Die Richtung des einströmenden Gases ist mit einem Pfeil 31 veranschaulicht. Von der Bohrung 51 führen zwei diametral einander gegenüberliegende radiale Verbindungskanäle 34, 36 zu der Wandaußenfläche des Grundkörpers 16 und münden dort in eine in der Wandaußenfläche des Grundkörpers 16 ringförmig umlaufende Nut 32, welche von der elastischen Wandung 18 überspannt ist.

In dem Boden 28 sind ferner in gleichem Winkelabstand voneinander vier Flüssigkeitskanäle 38, 40, 42 und 44 vorgesehen, durch welche bei Betrieb der Begasungsvorrichtung Flüssigkeit von dem Innenraum 88 in Richtung des Pfeiles 45 nach unten strömen kann.

In das obere Ende der Bohrung 51 ist ein Justierelement 46 eingesetzt, welches mit einem oberen verjüngten ersten Abschnitt 48 durch die obere Stirnwand 64 der Bohrung 51 in den Innenraum 88 hineinragt, während es mit einem unteren, mit größerem Außendurchmesser ausgestatteten zweiten Abschnitt 50 im Bereich der Abzweigung der Flüssigkeitskanäle 38 bis 44 drehbar gelagert ist. Die Stirnwand 64 bildet eine Ringschulter 65, an welche sich das Justierelement 46 mit einer Ringschulter 49 zwischen erstem und zweitem Abschnitt 48, 50 über eine Ringdichtung 72 anlegen kann. Eine weitere Ringdichtung 70 umfaßt den ersten Abschnitt 48 in dem Bereich unmittelbar oberhalb der Stirnwand 64, um für eine zusätzliche Abdichtung zu sorgen.

Der zweite Abschnitt 50 des Justierelements 46 bildet im Bereich der Flüssigkeitskanäle 38 bis 44 eine Ringwand 66 mit der Anzahl und Lage der Verbindungskanäle 34, 36 entsprechenden Aussparungen 68, welche durch Verdrehen des Justierelements 46 um seine Längsachse mehr oder weniger zur Deckung mit den Einlaßöffnungen der Verbindungskanäle 34, 36 gebracht werden können, so daß der der Innenseite der Wandung 18 zugeführte Gasvolumenstrom regulierbar ist.

Das Justierelement 46 ist ferner mit einer Bohrung 52 versehen, welche unten, d.h. zum Gaseinlaß 30 hin offen ist und welche an ihrem oberen Ende vor einem Kopfabschnitt 60 in als Radialkanäle ausgebildete Entwässerungsöffnungen 54, 56 mündet, welche bis zur Wandaußenfläche 57 des Justierelements 46 reichen. Auf der Wandaußenfläche 57 sitzt ein Mantel 58 aus elastischem Material, welcher auch die Ausgangsquerschnitte der Entwässerungsöffnungen 54, 56 überspannt. In der Oberseite des Kopfabschnitts 60 befindet sich ein Verdrehschlitz 62 für den Eingriff eines Schraubendrehers, mit Hilfe dessen das Justierelement 46 von oben in die gewünschte Winkellage zur Regulierung des Gasvolumenstromes verstellt werden kann.

Die Wandung 18 des Gasverteilers 10 wird zwischen den Klammern 20, 22 von einem Verstellmittel 74 eng umfaßt, welches als Manschette 76 aus flexiblem Material ausgebildet ist. Die Manschette 76 kann stufenlos längs der Wandung 18, also vertikal, verschoben werden.

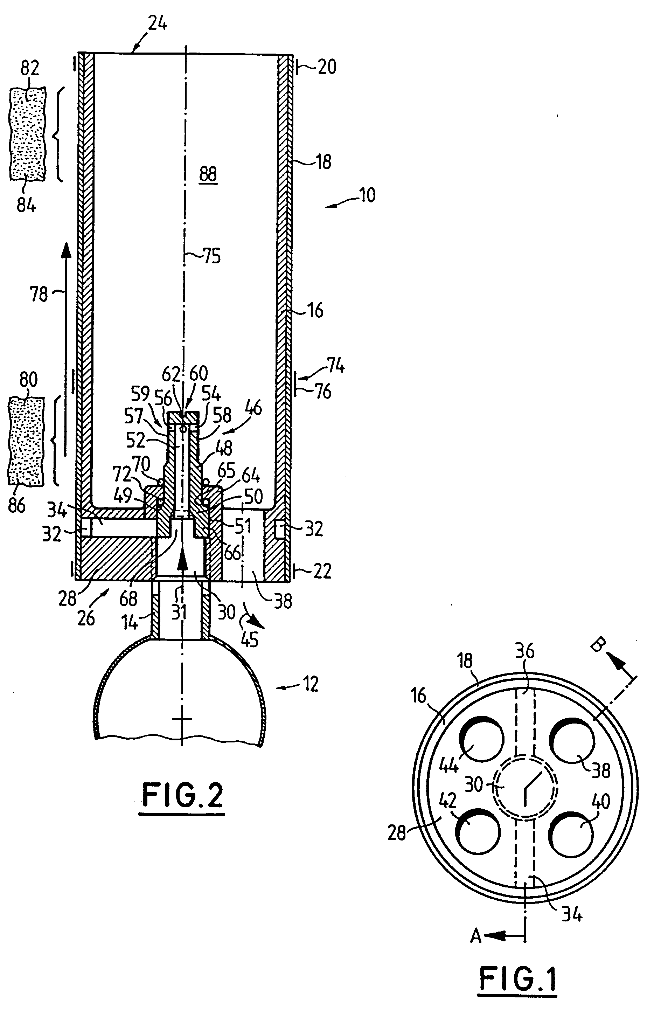

Die Wandung 18 selbst weist eine Vielzahl von Perforationen 84, 86 auf, deren Flächendichte in Gasströmungsrichtung 78, d.h. in dem dargestellten Fall von unten nach oben, abnehmen kann. Wie bei Fig. 2 skizziert, sind in dem unteren Wandungsabschnitt 80 pro Flächeneinheit bspw. mehr Perforationen 86 vorhanden, als in dem oberen Wandabschnitt 82. Die Querschnittsform der Löcher der Perforationen 84, 86 kann kreis-, schlitz- oder sternförmig sein, in ihrer Tiefe können sie keil- oder kegelförmige Gestalt haben mit von außen nach innen zunehmender oder abnehmender Querscnittsfläche.

Bei Druckbeaufschlagung des Gasverteilers 10 tritt das Gas durch den Gaseinlaß 30 ein und gelangt, wenn sich das Justierelement 46 in Öffnungsstellung befindet, über die Verbindungskanäle 34, 36 in die Nut 32 und von dort aus zwischen die Wandaußenfläche des Grundkörpers 16 und die Wandung 18, welche sich unter dem Gasdruck nach außen wölbt. Das Gas kann durch die Perforationen 84, 86 in die den Gasverteiler 10 umgebende Flüssigkeit horizontal austreten. Aufgrund der außerhalb des Gasverteilers 10 aufsteigenden Gasblasen bildet sich dort eine Flüssigkeitsströmung nach oben, im Innenraum 88 und den sich anschließenden Flüssigkeitskanälen 38 bis 44 dagegen, nach unten. Wenn die Perforationsdichte im unteren Bereich der Wandung 18 größer ist als im oberen Bereich, wird eine gewisse Kompensation für das Druckgefälle in der umgebenden Flüssigkeit von unten nach oben geschaffen, welcher einer Vergleichmäßigung des Gasaustrittes dient. Wird die Wandung 18 nur mit geringem Druck beaufschlagt, so tritt zunächst Gas nur aus dem Wandungsbereich unterhalb der Manschette 76 aus elastischem Material aus. Bei steigendem Druck weitet sich auch die Manschette 76 aus, so daß ein ringförmiger Gasdurchtrittskanal zwischen der unterhalb der Manschette 76 zwischen Wandaußenfläche des Grundkörpers 16 und Wandung 18 gebildeten Kammer und der oberhalb der Manschette 76 zwischen Außenwand des Grundkörpers 16 und Wandung 18 gebildeten Kammer entsteht. Je nach axialer Lage der Manschette 76, Gasdruck und Materialbeschaffenheit der Manschette 76 wird ein bestimmtes Begasungsbild der aus der Wandung 18 in die umgebende Flüssigkeit austretenden Gasblasen entstehen. Durch Verschieben der Manschette 76 längs der Wandung 18 läßt sich dieses Begasungsbild einstellen. Werden mehr als eine Manschette 76 aus elastischem Material eingesetzt, können sich unter dem Gasdruck entsprechend mehr Teilkammern zwischen Wandaußenfläche des Grundkörpers 16 und elastischer Wandung 18 ausbilden, so daß noch eine feinere Einstellung des Begasungsbildes der aus der Wandung 18 austretenden Gasblasen vorgenommen werden kann.

Der gesamte, aus dem Gasverteiler 10 austretende Gasvolumenstrom kann mittels des Justierelements 46 eingestellt werden. Je nach Drehstellung des Justierelements 46 ist der Einlaßquerschnitt der Verbindungskanäle 34, 36 durch die Ringwand 66 mehr oder weniger geschlossen.

Wird dem Gasverteiler 10 über den Gaseinlaß 30 Gas zugeführt, wenn sich das Justierelement 46 in vollständiger Schließstellung befindet, so bewirkt der Gasdruck ein Abheben des elastischen Mantels 58 von der Wandaußenfläche 57 des ersten Abschnitts 48 des Justierelements 46 im Bereich Entwässerungsöffnungen 54, 56, so daß in der Gaseinlaß 30 eingedrungene Flüssigkeit über die Entwässerungsöffnungen 54, 56 ausgetrieben werden kann. Befindet sich das Justierelement 46 in einer wenigstens teilweise geöffneten Stellung, so reicht der Gasdruck in der Regel nicht aus, um den Mantel 58 im Bereich der Entwässerungsöffnungen 54, 56 von diesen abzuheben, so daß der Gasstrom ausschließlich in die Verbindungskanäle 34, 36 gelangt.

Die Entwässerungsöffnungen 54, 56 können aber auch dazu genutzt werden, um der Flüssigkeit in dem Innenraum 88 eine geringe Menge an Gas zuzuführen. Dies kann sowohl in ganz oder teilweise geöffneter Drehstellung des Justierelements 46 als auch in dessen vollständig geschlossener Drehstellung geschehen. Dabei kann der elastische Mantel auch perforiert sein.

### Bezugszeichenliste:

- 10: Gasverteiler
- 12: Verteilerrohr
- 14: Verbindungsstutzen
- 16: Grundkörper
- 18: Wandung
- 20: Klammer
- 22: Klammer
- 24: oberer Abschnitt
- 26: unterer Abschnitt
- 28: Boden
- 30: Gaseinlaß
- 31: Pfeil
- 32: Nut
- 34: Verbindungskanal
- 36: Verbindungskanal
- 38: Flüssigkeitskanal
- 40: Flüssigkeitskanal
- 42: Flüssigkeitskanal
- 44: Flüssigkeitskanal
- 45: Pfeil
- 46: Justierelement
- 48: erster Abschnitt
- 49: Ringschulter
- 50: zweiter Abschnitt
- 51: Bohrung
- 52: Bohrung
- 54: Entwässerungsöffnung
- 56: Entwässerungsöffnung
- 57: Wandaußenfläche
- 58: Mantel
- 60: Kopfabschnitt
- 62: Verdrehschlitz
- 64: Stirnwand
- 65: Ringschulter
- 66: Ringwand
- 68: Aussparung
- 70: Ringdichtung
- 72: Ringdichtung
- 74: Verstellmittel
- 75: Längsachse
- 76: Manschette
- 78: Gasströmungsrichtung
- 80: Wandungsabschnitt
- 82: Wandungsabschnitt
- 84: Perforation
- 86: Perforation
- 88: Innenraum

## Patentansprüche

1. Vorrichtung zum Begasen von Flüssigkeiten, insbesondere zum Belüften von Abwasser, mit einem an eine Gaszufuhreinrichtung anschließbaren Gasverteiler (10), welcher einen, vorzugsweise im wesentlichen zylindrischen und vorzugsweise mit vertikaler Längsachse (75) anordenbaren und vorzugsweise in seinem Boden (28), mit ein oder mehreren mit seinem Innenraum (88) in Strömungsverbindung stehenden Flüssigkeitskanälen (38 bis 44) ausgestatteten Grundkörper (16) und eine diesen membranartig umspannende, vorzugsweise schlauchförmige, Wandung (18) aus elastischem Material mit Perforationen (84, 86) aufweist, wobei die Wandung (18) über einen Gaseinlaß (30) des Grundkörpers (16) von innen mit Gas beaufschlagbar ist, dadurch gekennzeichnet, daß die Wandung (18) zwischen ihren axialen Endbereichen, an welchen sie an dem Grundkörper (16) gehalten ist, so von einem Verstellmittel (74) ringförmig umfaßt ist, daß die Wandung (18) im Bereich des Verstellmittels (74) jedenfalls ohne Gasbeaufschlagung an dem Grundkörper (16) anliegt, und daß das Verstellmittel (74) in Richtung der Längsachse (75) des Grundkörpers (16) verschiebbar ist.

2. Vorrichtung nach Anspruch 1, dadurch gekennzeichnet, daß das Verstellmittel (74) als wenigstens eine Manschette (76) aus elastischem Material ausgebildet ist, welche die Wandung (18) umschließt.

3. Vorrichtung nach Anspruch 1 oder 2, dadurch gekennzeichnet, daß die Anzahl der Perforationen (84, 86) der Wandung (18) pro Flächeneinheit und/oder die Größe der Perforationen (84, 86) in Gasströmungsrichtung (78), vorzugsweise in vertikaler Richtung nach oben, abnimmt.

4. Vorrichtung nach einem der vorhergehenden Ansprüche, dadurch gekennzeichnet, daß der der Wandung (18) über den Gaseinlaß (30) zuführbare Gasvolumenstrom mittels eines in dem Grundkörper (16) von außen verstellbaren Justierelement (46) einstellbar ist.

5. Vorrichtung nach Anspruch 4, dadurch gekennzeichnet, daß der Gaseinlaß (30) in dem Boden (28) des Grundkörpers (16) als eine axiale, vorzugsweise zentrische, Bohrung (51) vorgesehen ist, von der ein oder mehrere, vorzugsweise radiale, Verbindungskanäle (34, 36) in Richtung der Wandung (18) abzweigen, wobei das Justierelement (46) - je nach Stellung - die Verbindungskanäle (34, 36) - mehr oder weniger - überlappend in der Bohrung (51) aufgenommen ist.

6. Vorrichtung nach Anspruch 4 oder 5, dadurch gekennzeichnet, daß das Justierelement (46) einen ersten Abschnitt (48) und einen zweiten Abschnitt (50) mit größerem Außendurchmesser sowie zwischen den Abschnitten (48, 50) eine Ringschulter (49) aufweist, mit welcher das Justierelement (46) gegen eine Ringschulter (65) der Bohrung (51) anliegt.

7. Vorrichtung nach Anspruch 6, dadurch gekennzeichnet, daß der zweite Abschnitt (50) in der Bohrung (51) des Gaseinlasses (30) aufgenommen ist und der erste Abschnitt (48) sich in den stirnseitig offenen Innenraum (88) des Grundkörpers (16) erstreckt.

8. Vorrichtung nach einem der Ansprüche 6 oder 7, dadurch gekennzeichnet, daß der erste Abschnitt (48) von einer die Ringschulter (65) bildenden Stirnwand (64) der Bohrung (51) umfaßt ist.

9. Vorrichtung nach einem der Ansprüche 6 bis 8, dadurch gekennzeichnet, daß zwischen den Ringschultern (49, 65) eine das Justierelement (46) umfassende Ringdichtung (72) angeordnet ist.

10. Vorrichtung nach Anspruch 8 oder 9, dadurch gekennzeichnet, daß eine den ersten Abschnitt (48) umfassende Ringdichtung (70) auf der Außenseite der Stirnwand (64) sitzt.

11. Vorrichtung nach einem der Ansprüche 4 bis 10, dadurch gekennzeichnet, daß das Justierelement (46) im Bereich des zweiten Abschnitts (50) eine Ringwand (66) mit einer oder mehreren Aussparungen (68) aufweist, welche mit dem Öffnungsquerschnitt von einem oder mehreren der Verbindungskanäle (34, 36) in Deckung bringbar ist (sind).

12. Vorrichtung nach einem der Ansprüche 4 bis 11, dadurch gekennzeichnet, daß das Justierelement (46) einen sich an den ersten Abschnitt (48) anschließenden Kopfabschnitt (60) aufweist, der mit Mitteln zum Verstellen, vorzugsweise Verdrehen, des Justierelementes (46), insbesondere mittels eines entsprechenden Werkzeuges, von dem stirnseitig offenen Innenraum (88) aus ausgestattet ist.

13. Vorrichtung nach Anspruch 12, dadurch gekennzeichnet, daß der Kopfabschnitt (60) einen Verdrehschlitz (62) aufweist.

14. Vorrichtung nach einem der Ansprüche 4 bis 13, dadurch gekennzeichnet, daß das Justierelement (46) wenigstens eine auf und zu steuerbare Entwässerungsöffnung (54) aufweist.

15. Vorrichtung nach Anspruch 14, dadurch gekennzeichnet, daß das Justierelement (46) eine sich zum Gaseinlaß (30) öffnende Bohrung (52) aufweist und daß die Entwässerungsöffnungen (54, 56) bildende Radialkanäle im Bereich des Kopfabschnittes (60) in der Außenwand (57) der Bohrung angeordnet sind.

16. Vorrichtung nach Anspruch 14 oder 15, dadurch gekennzeichnet, daß das Justierelement (46) wenigstens im Bereich der Entwässerungsöffnungen (54, 56) von einem Mantel (58) aus elastischem Material umspannt ist.

17. Vorrichtung nach einem der Ansprüche 1 bis 16, dadurch gekennzeichnet, daß die Löcher der Perforationen (84, 86) der Wandung (18) und/oder des Mantels (58) unter Vorspannung des diese bildenden elastischen Materials eingestanzt bzw. -gestochen sind.

18. Vorrichtung nach einem der Ansprüche 1 bis 17, dadurch gekennzeichnet, daß die Löcher der Perforationen (84, 86) in ihrem Querschitt kreis-, schlitz- oder sternförmig, insbesondere in ihrer Tiefe keil- oder kegelförmig, ausgebildet sind.

## Claims

1. Device for gasifying fluids, in particular for aerating waste water, with a gas distributor (10) connectable to a gas supply device, with a basic body (16), preferably essentially cylindrical and preferably which can be arranged with a vertical longitudinal axis (75) and preferably in its base (28) equipped with one or more fluid channels (38 to 44) in flow connection with its interior (88), and a preferably hose-shaped side (18) surrounding the said basic body (16) like a membrane and made of elastic material with perforations (84, 86), where the side (18) can be impacted by gas from its inside via a gas inlet (30) from the basic body (16), characterised in that between its axial end areas by which it is held on the basic body (16), the side (18) is surrounded in a ring-like manner by an adjustment means (74), that the side (18) lies against the basic body (16) in all cases without gas impact in the area of the adjustment means (74), and that the adjustment means (74) can be displaced in the direction of the longitudinal axis (75) of the basic body (16).

2. Device according to claim 1, characterised in that the adjustment means (74) are formed as at least one sleeve (76) of elastic material which surrounds the side (18).

3. Device according to claim 1 or 2, characterised in that the number of perforations (84, 86) of the side (18) per surface unit and/or the size of the perforations (84, 86) in the gas flow direction (78), diminishes preferably upwards in the vertical direction.

4. Device according to any of the previous claims, characterised in that the gas volume flow which can be passed to the side (18) via the gas inlet (30) is adjustable by means of an adjustment element (46) in the basic body (16) adjustable from the outside.

5. Device according to claim 4, characterised in that the gas inlet (30) is provided in the base (28) of the basic body (16) as an axial, preferably centric bore (51) from which one or more preferably radial connecting channels (34, 36) branch out in the direction of the side (18), where the adjustment element (46) - depending on position - is held in the bore (51) more or less overlapping the adjustment channels (34, 36).

6. Device according to claim 4 or 5, characterised in that the adjustment element (46) has a first section (48) and a second section (50) with a greater external diameter and between the sections (48, 50) an annular shoulder (49) with which the adjustment element (46) lies against an annular shoulder (65) of the bore (51).

7. Device according to claim 6, characterised in that the second section (50) is held in the bore (51) of the gas inlet (30) and the first section (48) extends into the interior (88) of the basic body (16) open at the front.

8. Device according to any of claims 6 or 7, characterised in that the first section (48) is surrounded by an end wall (64) of the bore (51) forming the annular shoulder (65).

9. Device according to any of claims 6 to 8, characterised in that between the annular shoulders (49, 65) is arranged an annular seal (72) surrounding the adjustment element (46).

10. Device according to claim 8 or 9, characterised in that an annular seal (70) surrounding the first section (48) sits on the outside of the end wall (64).

11. Device according to any of claims 4 to 10, characterised in that the adjustment element (46) has an annular wall (66) in the area of the second section (50) with one or more recesses (68) which can be brought to align with the opening cross section of one or more of the connecting channels (34, 36).

12. Device according to any of claims 4 to 11, characterised in that the adjustment element (46) has a head section (60) connecting with the first section (48) and is equipped with means of adjustment, preferably twisting, of the adjustment element (46), in particular by means of a corresponding tool, from the interior (88) open at the end.

13. Device according to claim 12, characterised in that the head section (60) has a twist slot (62).

14. Device according to any of claims 4 to 13, characterised in that the adjustment element (46) has at least one drainage water opening (54) which can be controlled open or closed.

15. Device according to claim 14, characterised in that the adjustment element (46) has a bore (52) opening into the gas inlet (30) and that the drainage water openings (54, 46) forming radial channels in the area of the head section (60) are arranged in the outer wall (57) of the bore.

16. Device according to claim 14 or 15, characterised in that the adjustment element (46) is surrounded by a shell (58) of elastic material at least in the area of the drainage openings (54, 56).

17. Device according to any of claims 1 to 16, characterised in that the holes of the perforations (84, 86) of the side (18) and/or the shell (58) are punched or pierced under pretension of the elastic material forming these.

18. Device according to any of claims 1 to 17, characterised in that the holes of the perforations (84, 86) are formed circular, slotted or star-shaped in cross section, in particular wedge-shaped or tapered in their depth.

## Revendications

1. Dispositif pour gazéifier des liquides, en particulier pour la ventilation d'eaux usées, avec un distributeur de gaz (10) pouvant être raccordé à une installation d'arrivée de gaz, lequel présente un corps de base (16) de préférence principalement cylindrique pouvant être disposé de préférence avec un axe longitudinal vertical (75) et de préférence dans son fond (28), muni d'un ou plusieurs canaux à liquide verticaux (38 à 44) communiquant avec sa chambre intérieure (88) dans le sens du flux, et une paroi (18) similaire à une membrane, entourant le corps, de préférence tubulaire, et en matériau élastique à perforations (84, 86), la paroi (18) pouvant être alimentée en gaz de l'intérieur au moyen d'une entrée de gaz (30) du corps de base (16), **caractérisé** en ce que la paroi (18), entre ses extrémités axiales auxquelles elle est retenue au corps de base (16), est entourée d'un organe de réglage (74) en forme d'anneau de telle sorte que la paroi (18), dans la zone de l'organe de réglage (74), s'appuie contre le corps de base (16) en tout cas quand il n'y a pas d'admission de gaz, et en ce que l'organe de réglage (74) est déplaçable dans le sens de l'axe longitudinal (75) du corps de base (16).

2. Dispositif selon la revendication 1, **caractérisé** en ce que l'organe de réglage (74) est formé au moins comme une manchette (76) en matériau élastique qui entoure la paroi (18).

3. Dispositif selon la revendication 1 ou 2, **caractérisé** en ce que le nombre de perforations (84, 86) de la paroi (18) diminue par unité de surface et/ou la taille des perforations (84, 86) diminue dans le sens du flux de gaz (78), de préférence vers le haut en direction verticale.

4. Dispositif selon l'une des revendications précédentes, **caractérisé** en ce que le débit volumétrique de gaz qui peut être amené à la paroi (18) par l'entrée de gaz (30) est réglable au moyen d'un élément d'ajustage (46) ajustable dans le corps de base (16) depuis l'extérieur.

5. Dispositif selon la revendication 4, **caractérisé** en ce que l'entrée de gaz (30) est prévue dans le fond (28) du corps de base (16) comme un trou (51) axial de préférence centré, duquel bifurquent un ou plusieurs canaux de liaison (34, 36), de préférence radiaux, dans la direction de la paroi (18), l'élément d'ajustage (46) - selon sa position - étant logé dans le trou (51) en recouvrant - plus ou moins - les canaux de liaison (34, 36).

6. Dispositif selon la revendication 4 ou 5, **caractérisé** en ce que l'élément d'ajustage (46) présente une première section (48) et une seconde section (50) d'un diamètre extérieur plus grand, ainsi qu'un épaulement circulaire (49) entre les sections (48, 50), avec lequel l'élément d'ajustage (46) s'appuie contre un épaulement circulaire (65) du trou (51).

7. Dispositif selon la revendication 6, **caractérisé** en ce que la seconde section (50) est logée dans le trou (51) de l'entrée de gaz (30) et que la première section (48) s'étend à l'intérieur (88) du corps de base (16) ouvert frontalement.

8. Dispositif selon l'une des revendications 6 ou 7, **caractérisé** en ce que la première section (48) est entourée d'une paroi frontale (64) formant l'épaulement circulaire (65) du trou (51).

9. Dispositif selon l'une des revendications 6 à 8, **caractérisé** en ce qu'un joint à bague (72) entourant l'élément d'ajustage (46) est placé entre les épaulements circulaires (49, 65).

10. Dispositif selon la revendication 8 ou 9, **caractérisé** en ce qu'un joint à bague (70) entourant la première section (48) est placé sur le côte extérieur de la paroi frontale (64).

11. Dispositif selon l'une des revendications 4 à 10, **caractérisé** en ce que l'élément d'ajustage (46) présente, dans la zone de la seconde section (50), une paroi circulaire (66) munie d'un ou plusieurs évidements (68) le(s)quel(s) peu(ven)t coïncider avec la section de l'orifice d'un ou de plusieurs des canaux de liaison (34, 36).

12. Dispositif selon l'une des revendications 4 à 11, **caractérisé** en ce que l'élément d'ajustage (46) présente une section de tête (60) se raccordant à la première section (48) et munie d'organes pour le réglage, de préférence la rotation de l'élément d'ajustage (46), en particulier au moyen d'un outil adéquat à partir de l'intérieur (88) ouvert frontalement.

13. Dispositif selon la revendication 12, **caractérisé** en ce que la section de tête (60) présente une fente de rotation (62).

14. Dispositif selon l'une des revendications 4 à 13, **caractérisé** en ce que l'élément d'ajustage (46) présente au moins un orifice d'évacuation (54) pouvant être ouvert et fermé.

15. Dispositif selon la revendication 14, **caractérisé** en ce que l'élément d'ajustage (46) présente un trou (52) s'ouvrant vers l'entrée de gaz (30) et que les canaux radiaux formant les orifices d'évacuation (54, 56) sont placés dans la zone de la section de tête (60) dans la paroi extérieure (57) du trou.

16. Dispositif selon la revendication 14 ou 15, **caractérisé** en ce que l'élément d'ajustage (46), au moins dans la zone des orifices d'évacuation (54, 56), est entouré d'une enveloppe (58) faite d'un matériau élastique.

17. Dispositif selon l'une des revendications 1 à 16, **caractérisé** en ce que les trous des perforations (84, 86) de la paroi (18) et/ou de l'enveloppe (58) sont perforés ou percés sous précontrainte du matériau élastique formant cette paroi.

18. Dispositif selon l'une des revendications 1 à 17, **caractérisé** en ce que les trous des perforations (84, 86) dans leur section sont formés de façon circulaire, rainurée ou en étoile, en particulier en forme de clavette ou de cône dans leur profondeur.
